# EUROPEAN PATENT SPECIFICATION

(11) **EP 1 360 890 B1**
(45) Date of publication and mention of the grant of the patent: **30.06.2010**
(21) Application number: 03252866.3
(22) Date of filing: 07.05.2003
(51) Int. Cl.: A01D 87/12, A01D 87/00, A23N 17/00

(54) **Bale moistening and handling apparatus**
Ballenbefeuchtungs- und -behandlungsvorrichtung
Dispositif pour humidifier et manipuler des balles

(30) Priority: 08.05.2002 US 140367; 08.05.2002 CA 2385418
(43) Date of publication of application: 12.11.2003
(73) Proprietor: Gilbrea Consulting Ltd., Ontario, N0B 1ZO (CA)
(72) Inventor: Wilson, Robert James, Hillsburgh, Ontario N0B 1ZO (CA)
(74) Representative: Davies, Gregory Mark

(56) References cited:
- DE-U- 8 804 301
- FR-A- 1 057 227
- GB-A- 2 220 637
- GB-A- 2 238 036
- US-A- 4 498 829
- US-A- 4 614 476

## Description

The invention relates to the field of bale moistening and handling apparatuses.

### BACKGROUND OF THE INVENTION

Before hay or similar feed is distributed to livestock, it is preferable to moisten or treat the feed with water or a conditioning liquid. Commonly, the feed is unbaled before moistening. The primary reason for moistening hay prior to feeding is to reduce or eliminate the dust that is commonly found in hay. This dust can cause very serious respiratory problems in livestock, especially in horses. In addition, this moistening, treating, or conditioning may make the feed more appetizing to livestock

A traditional means of moistening, treating, or conditioning hay has been to pour or spray a desired liquid onto the unbaled or baled hay before it is distributed to livestock feeding areas. However, the process used for spraying or pouring is imprecise, labour intensive, time consuming, and inconvenient. Often liquid is wasted or more than the required amount is added to compensate for the wasted amounts. If the hay remains baled during the process, labour intensity and inconvenience are substantial as the weight of a bale will greatly increase upon moistening. This is especially so if the moistening and handling of moistened bales are to be conducted indoors as well as outdoors. Therefore, a means is required for moistening, treating, or conditioning baled feed which reduces waste and can be carried out at a convenient place and time, such as during bale handling prior to distribution to livestock located indoors or outdoors.

Devices for moistening, treating, or conditioning bales are known. For example, liquids may be injected into bales. An injection probe is employed for this purpose in Canadian Patent. No. 1,234,313, issued March 22, 1988, to Akins. Injecting spikes are used for the same purpose in United States Patent No. 4,606,172, issued August 19, 1986, to Miller and in United States Patent No. 5,789, 072, issued August 4, 1998, to Ulrich. Similarly, devices for spray injecting liquids into bales are also known. For example, jet-forming nozzles are employed in United States Patent No. 4,627,338, issued December 9, 1986, to Sprott and Rotz and in Canadian Patent Application No. 2,082,504, filed May 6,1991, by Carlson and Stockel. Moreover, devices for sprinkling baled material from above and for pouring liquids into bales are also known. For example, reference may be made to United States Patent No. 4,182,780, issued January 8, 1980, to Lagerstrom and Nilsson and to German Patent No. 3,907,008A1, published September 6, 1990, by Dues.

Furthermore, devices for submerging baled material in a liquid are also known. For example, reference may be made to Canadian Patent Application No. 2,132,322, filed on March 18,1993, by Stockel and Carlson and to Canadian Patent Application No. 2,166,476, filed on July 19, 1994, by Stockel and Carlson. The bale moistening device disclosed in these patents, while intended to be deployed outdoors, are not easily deployed indoors. None of these patents provide a simple and convenient method of conserving moistening, conditioning, or treating bales.

Another known bale submerging device is shown in German utility model No. 88 04 301 U issued June 30, 1988 to Kegel. This device employs a manually operated, parallelogram-type arrangement for raising and lowering bales into a container filled with a liquid. The bales are supported on a submergible platform. The device is designed to immerse bales into the liquid in the container.

In addition, devices for bale handling are described in United States Patent No. 5,725,346, issued March 10, 1998, to Davina, United States Patent No. 4.498,829, issued February 12,1985, to Spikes and te United States Patent No. 4,363,583, issued December 14, 1982, to Bontrager. The bale handing devices disclosed in these patents are employed to load a bale carrying truck or similar bale mover. These devices are not specifically designed for moistening bales or for the simple and convenient handling of moistened bales both indoors and outdoors.

Although the patents referred to above relate to either bale moistening or bale handling, none of these patents disclose a simple and convenient apparatus for performing the combined function of moistening and handling bales.

A need therefore exists for a simple and convenient bale moistening and handling apparatus which overcome the problems inherent in the use of existing devices and methods. Consequently, it is an object of the present invention to provide such a bale moistening and handling apparatus.

### SUMMARY OF THE INVENTION

In general, the invention described herein provides a bale moistening and handling apparatus. The apparatus described is generally applicable to the moistening and handling of feed, but is specifically applicable to the handling of hay and to the reduction or elimination of dust in hay.

According to the invention, there is provided an apparatus according to claim 1 and a method according to claim 13.

According to another aspect of the invention, the operating means of the apparatus includes a programmable logic controller.

According to another aspect of the invention, the tank of the apparatus further includes automatic liquid filling means and drain valve means.

According to another aspect of the invention, the boom of the apparatus is operable to rotate about its longitudinal axis.

Advantageously, the present invention allows bales to be moistened and handled prior to unbaling. This save times and effort in moistening feed prior to feeding. It is a further advantage of the present invention that the use of a common base allows the bale moistening and handling apparatus to be conveniently relocated.

### BRIEF DESCRIPTION OF THE DRAWINGS

The invention may best be understood by referring to the following description and accompanying drawings which illustrate the invention. In the drawings:
FIG. 1 is a front view illustrating a bale moistening and handling apparatus in accordance with an embodiment of the invention;
FIG. 2 is a top view of the apparatus of FIG. 1;
FIG. 3 is a rear view of the tank of the apparatus of FIG. 1;
FIG. 4 is a side view of the tank of the apparatus of FIG. 1;
FIG. 5 is a top view illustrating a bale moistening and handling apparatus in accordance with an alternate embodiment of the invention;
FIG. 6 is a top view illustrating a bale moistening and handling apparatus in accordance with an alternate embodiment of the invention;
FIG. 7 is a top view illustrating a bale moistening and handling apparatus in accordance with an alternate embodiment which does not form part of the invention;
FIG. 8 is a front perspective view illustrating a bale moistening and handling apparatus in accordance with an alternate embodiment of the invention;
FIG. 9 is a detail front view illustrating the boom rotation means of the apparatus of FIG. 8;
FIG. 10 is a side view illustrating a bale moistening and handling apparatus in accordance with an alternate embodiment of the invention;
FIG. 11 is a partial side view illustrating a bale moistening and handling apparatus in accordance with an alternate embodiment of the invention; and,
FIG. 12 is a partial top view illustrating a bale moistening and handling apparatus in accordance with an alternate embodiment of the invention.

### DETAILED DESCRIPTION OF THE PREFERRED EMBODIMENTS

In the following description, numerous specific details are set forth to provide a thorough understanding of the invention. However, it is understood that the invention may be practiced without these specific details. In other instances, well-known components, structures and techniques have not been described or shown in detail in order not to obscure the invention. In the drawings, like numerals refer to like structures or processes.

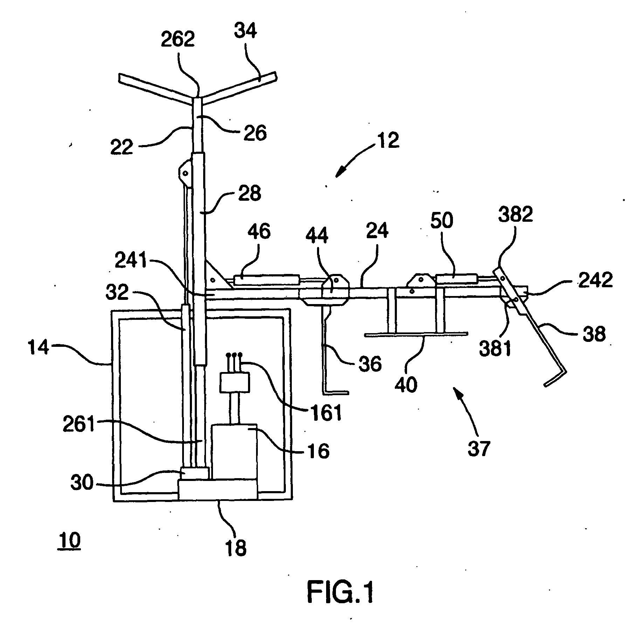

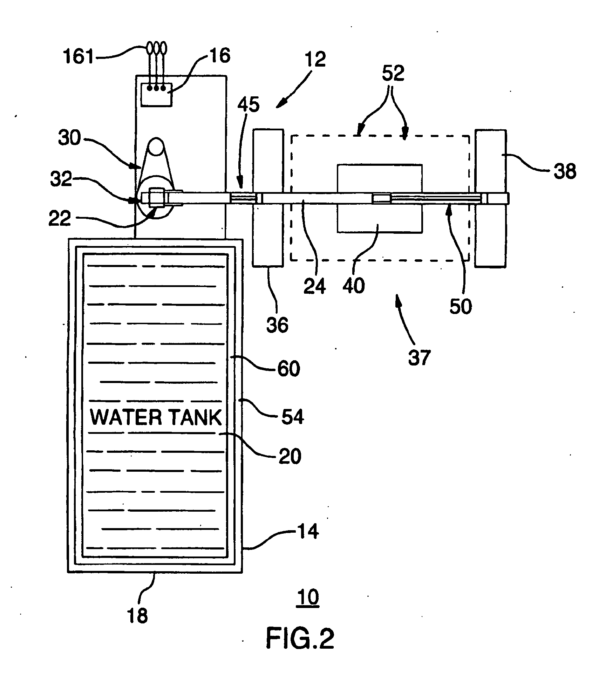

Referring to FIGS. 1 and 2, there are shown respective front and top views of a bale moistening and handling apparatus **10** according to an embodiment of the invention. The apparatus **10** includes a bale handler **12**, a bale moistening tank **14**, and control means **16** each of which may be mounted on a common base **18.** It is an advantage of the present invention that the use of a common base **18** allows the bale moistening and handling apparatus **10** to be conveniently relocated. However, the bale handler **12**, tank **14**, and control means **16** need not all be mounted on base **18** as, for example, if the apparatus **10** is installed in a confined area. By allowing flexibility in the positioning of the bale handler **12**, tank **14**, and control means **16**, the apparatus **10** may be configured for permanent placement at equestrian venues, mobile deployment at single events, or for custom installation.

The bale handler **12** includes a mast **22** and a boom **24**. The mast **22** has an outer member **28** which is slidable over an inner member **26**. The inner member **26** has a base end **261** and an outer end **262**. The inner member **26** is fixedly attached at its base end **261** by bolts or other suitable means to a hydraulic chain-drive **30** or other suitable actuator which in turn is mounted on the common base **18** of the apparatus **10** by any suitable shaft means. The hydraulic chain-drive **30** or other suitable actuator is operable to rotate the mast **22** of the bale handler **12** about its longitudinal axis. The outer member **28** of the mast **22** is operable, by means of a hydraulic cylinder **32** or other suitable actuator connected between it and the base end **261** of the inner member **26** by suitable pin connectors, to travel over the inner member **26** along that member's longitudinal axis. The outer end **262** of the inner member **26** may be attached to one or more supplementary support members **34** which in turn may be connected to nearby walls, roofing members, or other structures as installation conditions may permit or require. However, these supplementary support members **34** may not be required, for example, if the bale handler **12**, tank **14**, and control means **16** were all mounted on the base **18**.

The boom **24** has a mast end **241** and an outer end **242**. The mast end **241** of the boom **24** is connected by bolts or by welding to the outer member **28** of the mast **22** thereby allowing the boom **24** to travel longitudinally with the outer member **28** of the mast **22** along the inner member **26** of the mast **22** and to travel rotationally with both the inner **26** and outer **28** members of the mast **22** about the longitudinal axis of the mast **22.**

Again referring to FIGS. 1 and 2, the boom **24** includes a bale gripping device **37**. The bale gripping device **37** includes a slidable bale gripping arm **36**, a pivoting bale gripping arm **38**, and fixed bale guide **40**. The slidable bale gripping arm **36** is disposed on the boom **24** proximate **241** to the mast **22**. The pivoting bale gripping arm **38** is disposed on the boom **24** proximate the outer end **242**. The fixed bale guide **40** is disposed on the boom **24** between the two bale gripping arms **36** and **38**.

The slidable bale gripping arm **36** includes a first gripping member **42** suspended from and fixedly connected to a sleeve member **44** by means of bolts or welding. The first gripping member **42** may be L-shaped, for example, to provide additional support for elevated bales. The sleeve member **44** encloses a segment of the boom **24.** The slidable bale gripping arm **36** is operable, by means of a hydraulic cylinder **46** or other suitable actuator connected by means of pins between the sleeve member **44** and the point **241** where the boom **24** attaches to the outer member **28** of the mast **22,** to travel longitudinally over the boom **24**.

The pivoting bale gripping arm **38** includes a second gripping member **48** suspended from the boom **24** by a pin assembly **381**. The second gripping member **48** may be L-shaped, for example, to provide additional support for elevated bales. A section **382** of the second gripping member **48** extends above the boom **24** to accept the connection of a hydraulic cylinder **50** or other suitable actuator. The pivoting bale gripping arm **38** is operable, by means of a hydraulic cylinder **50** or other suitable actuator connected between the section **382** of the second gripping member **48** extending above the boom **24** and a point on the main horizontal boom **24** approximately over the point where the fixed bale guide **40** is disposed, to pivot about the longitudinal axis of the outer end **242** of the boom **24**.

In operation, a bale **52** may be gripped by the combined operation of the slidable bale gripping arm **36**, the pivoting bale gripping arm **38**, and the fixed bale guide **40**. Using the control means **16**, the fixed bale guide **40** is positioned over a bale **52** to be moistened, such that the longitudinal axis of the boom **24** is approximately parallel to the longitudinal axis of the bale **52,** and lowered such that contact with the top of the bale **52** is made. The opposing slidable and pivoting bale gripping arms **36**, **38** may then be individually or simultaneously operated to close in upon the bale **52**, compressing the bale **52**, and hence gripping the bale **52**. If, for example, L-shaped gripping arms **36** and **38** are employed, additional support for the bale **52** during moistening may be provided.

The control means **16** preferably includes several levers **161** to control the operation of the four hydraulic cylinders **30**, **32**, **46** and **50**, or other suitable actuators, associated with the bale handler **12.** It is an advantage of the present invention that the control means **16** and hence bale handler **12** may be easily operated. The hydraulic power source associated with the control means **16** may be mounted on or remote from the base **18**. The control means **16** may include a programmable logic controller (PLC) to allow for fully automatic and coin operation. Alternatively, and as will be described below, the apparatus **10** may be manually operated.

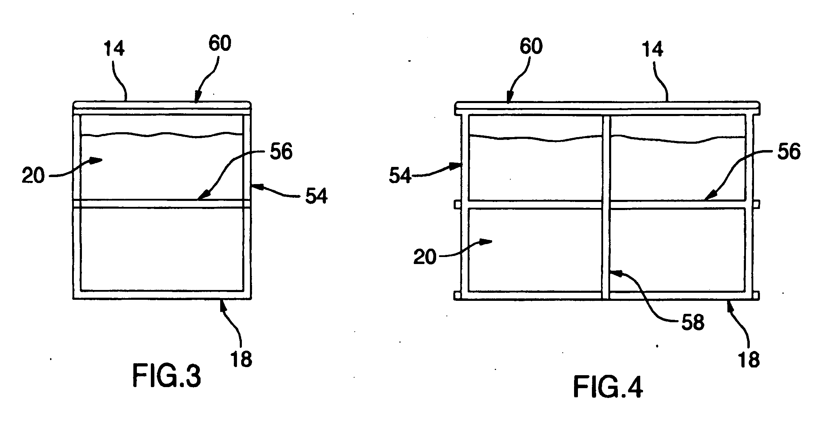

Referring to FIGS. 3 and 4, side and rear views of the bale moistening tank **14** are illustrated, respectively. The bale moistening tank **14** includes a tank frame **54** enclosing a liquid container **60**. The tank frame **54** supports the liquid container **60** and includes suitable strength members **56**, **58**. The tank frame **54** and liquid container **60** may be rectangular in shape. The liquid container **60** may be composed of lighter-weight materials due to the inclusion of the tank frame **54**. The tank frame **54** maintains the liquid container **60** in a fixed position during the submersion of bales. The liquid container **60** is filled with water **20** or another moistening, treating, or conditioning liquid. The bale moistening tank **14** may be equipped with automatic liquid filling means and drain valve means.

Referring to FIGS. 1, 2, 3 and 4, the apparatus **10** is operable by the control means **16** and bale handler **12** to: grip a bale **52** which may be located on either side of the base **18**; elevate, rotate, and position the bale **52** over the bale moistening tank **14** which may be located near the centre of the base **18** and which is filled with a bale moistening, conditioning, or treating liquid **20**; lower and submerge the bale **52** in the liquid **20** contained in the bale moistening tank **14**; elevate the then moistened bale **52** over the bale moistening tank **14** to allow excess liquid to drain from the bale **52** back into the tank **14**; and, rotate, lower, and deposit the moistened bale **52** again on either side of the base **18**. Note that the apparatus **10** maintains a grip on the bale **52** during submersion in the liquid **20** as bales, particularly hay bales, tend to float. The apparatus **10** is thus applicable to the moistening and handling of hay and to the reduction or elimination of dust in hay.

In the following, several alternative embodiments of the invention will be described. These alternative embodiments vary from the preferred embodiment in several ways including the following: configuration of components; power source; means used to grip bales; orientation of bales handled; pick up location of bales; deposit location of bales; size and shape of bales handled; and, number of bales handled at one time.

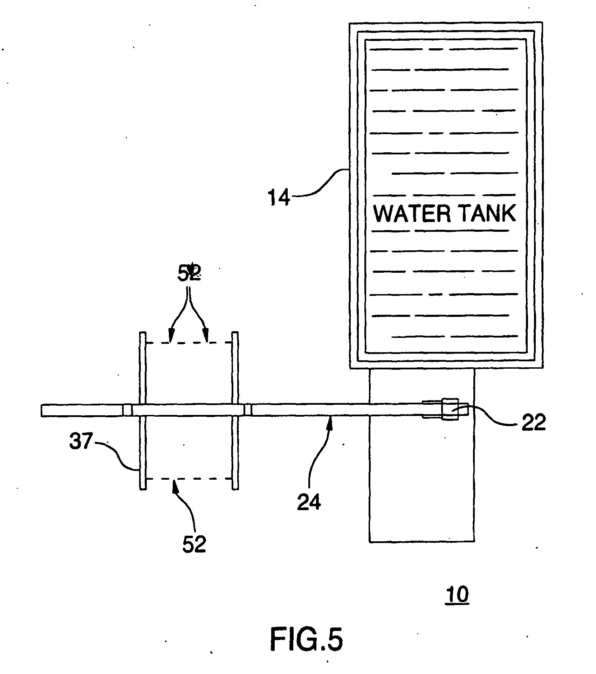

Referring to FIG. 5, there is shown a top view illustrating a bale moistening and handling apparatus **10** in accordance with an alternate embodiment of the invention. The boom **24** of the apparatus **10** is shown rotated to the left side. The apparatus is configured to handle multiple bales. Two bales **52** are illustrated. It is understood that the apparatus **10** may handle bales **52** of different shape and size.

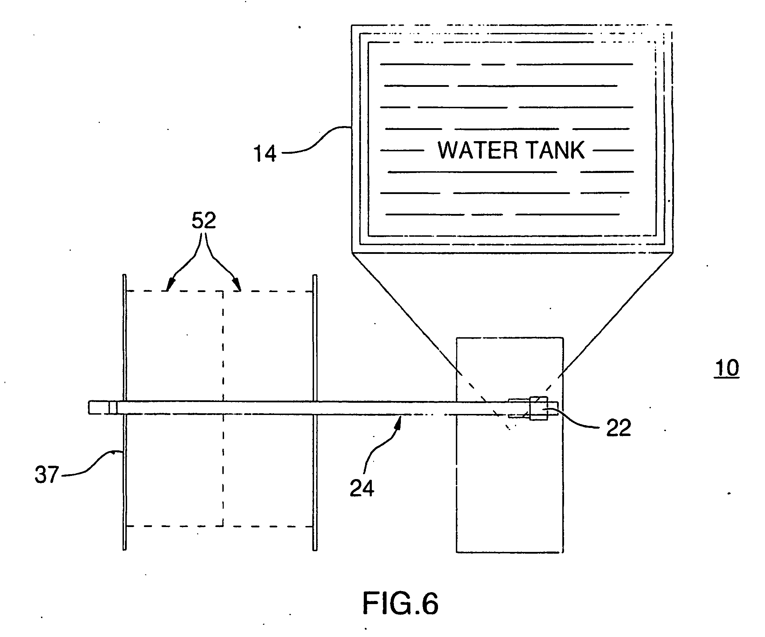

Referring to FIG. 6, there is shown a top view illustrating a bale moistening and handling apparatus **10** in accordance with an alternate embodiment of the invention. In this embodiment, the bales **52** are rotated ninety degrees with respect to the boom **24**. The tank **14** is also rotated ninety degrees to accept the reoriented bales **52**. The rotation of the bales **52** and tank **14** may allow the apparatus to be installed in a smaller space.

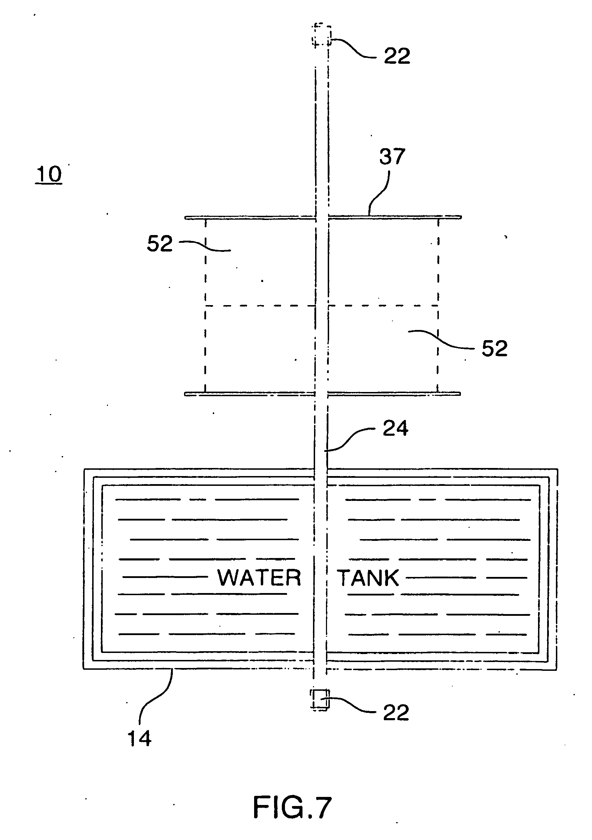

Referring to FIG. 7, there is shown a top view illustrating a bale moistening and handling apparatus **10** in accordance with an alternate embodiment which does not form part of the invention. In this embodiment, the boom **24** is mounted between two posts **22** and the bale gripping device **37** is slidable along the boom **24**. This embodiment has the advantage that means for rotating the boom **24** are not required. Consequently, this embodiment may require may be installed in a smaller space.

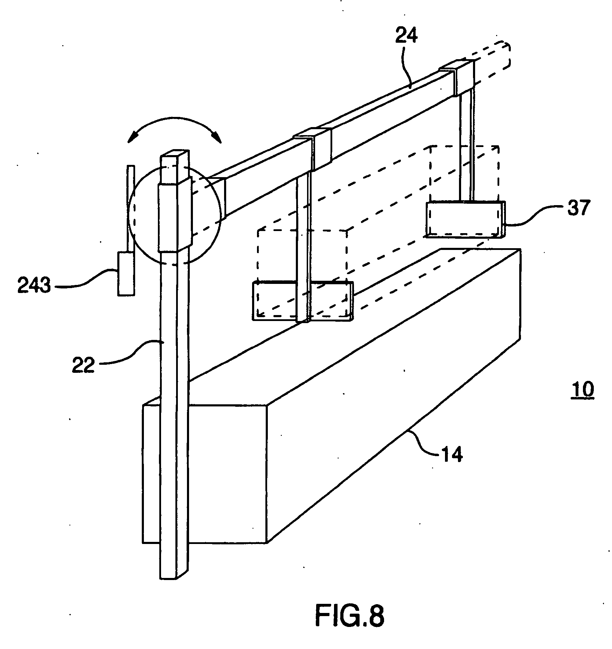

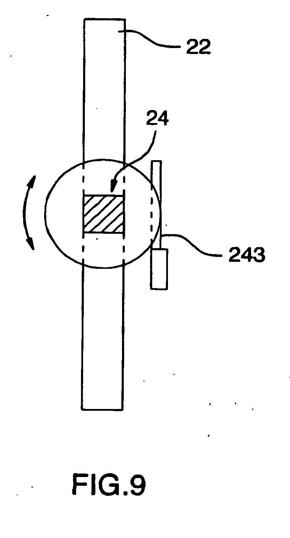

Referring to FIG. 8, there is shown a front perspective view illustrating a bale moistening and handling apparatus **10** in accordance with an alternate embodiment of the invention. In this embodiment, means **243** are provided to rotate the boom **24** about its longitudinal axis. The boom rotation means **243** may be a worm gear or similar device and may be coupled between the boom **24** and mast **22** at the point **241** where these two members meet. The boom rotation means **243** may be operated by the control means **16**. The boom rotation means **243** allows the bale gripping device **37** access to bales that may be stored on a rack located above the apparatus **10**. With the boom rotation means **243**, the apparatus **10** may be operated, for example, in a two-story building. A detail front view of the boom rotation means **243** is illustrated in FIG. 9.

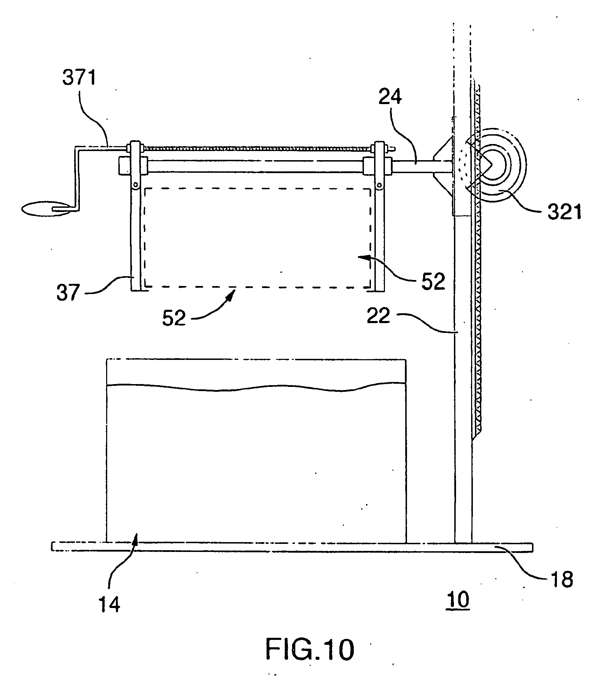

Referring to FIG. 10, there is shown a side view illustrating a bale moistening and handling apparatus **10** in accordance with an alternate embodiment of the invention. In this embodiment, a rack and pinion means **321** is used to raise and lower the boom **24** along the mast **22** rather than a hydraulic cylinder **32** as illustrated in FIG. 1. The rack and pinion means **321** allows the apparatus **10** to be operated manually. In addition, the bale gripping device **37** may be operated manually using a crank and screw means **371** rather than hydraulic cylinders **46**, **50** as illustrated in FIG. 1. In this embodiment, the bale gripping device **37** includes two opposed, slidable bale gripping arms **36**.

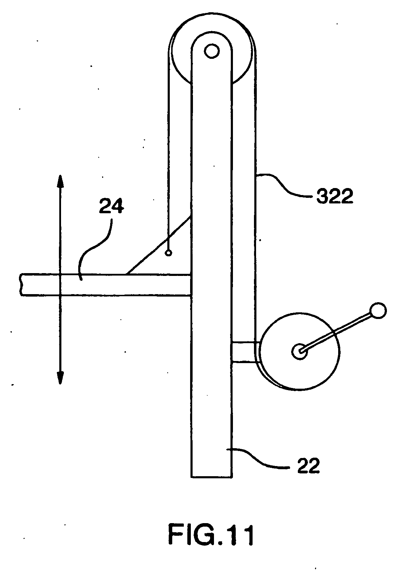

Referring to FIG. 11, there is shown a partial side view illustrating a bale moistening and handling apparatus **10** in accordance with an alternate embodiment of the invention. In this embodiment, a cable and hand winch means **322** is used to raise and lower the boom 24 along the mast 22 rather than a rack and pinion means 321 as illustrated in FIG. 10.

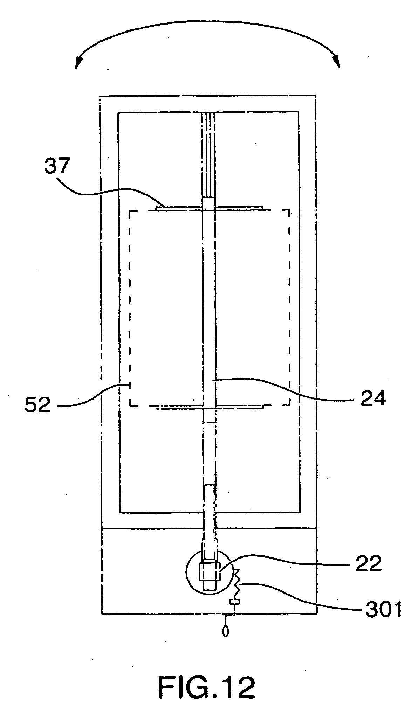

Referring to FIG. 12, there is shown a partial top view illustrating a bale moistening and handling apparatus 10 in accordance with an alternate embodiment of the invention. In this embodiment, a hand crank and worm gear means 301 is used to rotate the mast 22 rather than a hydraulic chain-drive 30 as illustrated in FIGS. 1 and 2. The hand crank and worm gear means 301 allows the apparatus 10 to be operated manually.

## Claims

1. An apparatus (10) for moistening and handling at least one bale (52), comprising:
an open-topped tank (14) for containing a liquid for moistening the at least one bale (52);
an upwardly extending mast assembly (22, 26, 28);
a boom (24) carried by said mast assembly (22, 26, 28), said boom (24) being moveable between a lowered position and a raised position and having a first end and a second end;
**characterised in that** said mast assembly (22, 26, 28) is rotatable about its longitudinal axis and extends upwardly from a base (18), said mast assembly (22, 26, 28) being adapted to slidably carry said second end of said boom;
a bale gripping device (37) mounted on said boom (24) proximate to the first end thereof, said bale gripping device (37) including a fixed bale guide (40) for engaging the at least one bale (52), the fixed bale guide (40) being positionable to be in contact with a top of the bale and wherein the bale gripping device 37 is arranged to maintain the bale in a submerged position within said tank (14) to facilitate moistening of the at least one bale (52);
means for operating said bale gripping device (37), the boom and said mast assembly (22, 26, 28) such that a bale located at a first location can be submerged in said liquid in said tank (14) to moisten said bale and thereafter be removed and deposited at a second location.

2. The apparatus (10) of claim 1 **characterised in that**:
said mast assembly (22, 26, 28) includes an inner mast portion (26) and an outer mast portion (28) concentrically mounted about said inner mast portion (26), said outer mast portion (28) being slideably moveable relative to said inner mast portion (26) along said longitudinal axis; and
said boom (24) is mounted to said outer mast portion (28).

3. The apparatus (10) of claim 2 **characterised in that** said boom (24) is attached to said outer mast portion (28) in a cantilevered fashion.

4. The apparatus (10) of claim 2 **characterised in that** said operating means comprises a first actuator (32) to urge said outer mast portion (28) of said mast assembly (22, 26, 28) to slide relative to said inner mast portion (26) thereof, and a second actuator (30) to urge said mast assembly (22, 26, 28) to rotate about its longitudinal axis.

5. The apparatus (10) of claim 1 **characterised in that**:
the at least one bale (52) is generally rectangular and has a plurality of sides; and
the bale gripping device (37) is configured so as to abut at least three sides of the rectangular bale (52).

6. The apparatus (10) of claim 1 **characterised in that**:
said bale gripping device (37) includes a pair of first and second, opposed, gripping arm assemblies (36, 38); and
said fixed bale guide (40) is disposed between said first and second gripping arm assemblies (36, 38).

7. The apparatus (10) of claim 6 **characterised in that** said bale guide (40) is fixedly mounted to, and depends downwardly from said boom (24).

8. The apparatus (10) of claim 7 **characterised in that** said first gripping arm assembly (36) is slidable along said boom (24), and said operating means comprises an actuator (46) for urging said sleeve member (44) to slide along said boom (24).

9. The apparatus (10) of claim 8 **characterised in that** said first gripping arm assembly (36) includes a sleeve member (44) mounted in surrounding relation to said boom (24), and a gripping member (42) downwardly depending from said sleeve member (44).

10. The apparatus (10) of claim 8 **characterised in that** said second gripping arm assembly (38) includes a gripping member (48) mounted for pivotal rotation about said boom (24); and said operating means comprises an actuator (50) for urging said gripping member (48) of said second gripping arm assembly (38) to pivot about said boom (24).

11. The apparatus (10) of claim 6 **characterised in that** both the first and second gripping arm assemblies (36) are slidablely moveable along said boom (24).

12. The apparatus (10) of claim 1 **characterised by** boom rotation means (243) coupled to said mast assembly (22, 26, 28) and said boom (24), for rotating said boom (24) about its longitudinal axis.

13. A method of handling and moistening at least one bale (52) comprising the steps of:
providing an apparatus comprising an extending upwardly mast assembly (22, 26, 28), a boom (24) carried by the mast assembly (22, 26, 28) and an open-topped tank (14) containing a liquid for moistening the at least one bale (52); the boom having a first end and a second end;
lowering the at least one bale (52) into the open-topped tank (14);
removing the at least one bale (52) from the open-topped tank (14) **characterised by**
further providing said apparatus with a base (18) from which the upwardly extending mast assembly (22, 26, 28) extends, a bale gripping device (37) mounted on the boom (24) proximate to the first end thereof, and including a pair of gripping members (36, 38) and a fixed bale guide (40);
gripping the at least one bale (52) located at a first portion between the pair of gripping members (36, 38) prior to lowering the at least one bale (52) into the open-topped tank (14);
moving the boom (24) relative to the longitudinal axis of the mast assembly (22, 26, 28) to alternatively raise or lower the bale (52);
rotating the boom (24) relative to the longitudinal axis of the mast assembly (22, 26, 28) to move the at least one bale (52) from the first position to a second position located above the open-topped tank (14) prior to lowering the at least one bale (52) into the open-topped tank (14);
maintaining the at least one bale (52) submerged in the liquid in the tank (14) with the bale gripping device (37), the fixed bale guide (40) positioned in contact with the top of the bale prior to removing the at least one bale (52) from the open-topped tank (14).

14. The method of claim 13 **characterised in that**:
the at least one bale (52) is generally rectangular and has a plurality of sides; and
gripping the at least one bale (52) includes urging the bale gripping device (37) to abut at least three sides of the at least one bale (52).

15. The method of claim 13 **characterised in that** gripping the at least one bale (52) includes urging the bale guide (40) to abut the top of the at least one bale (52);
and actuating at least one of the gripping members (42, 44) to grippingly engage the at least one bale (52).

16. The method of claim 15 **characterised in that** the gripping the at least one bale (52) includes actuating both gripping members (42, 44) simultaneously to grippingly engage the at least one bale (52).

17. The method of claim 16 **characterised in that**:
one (42) of the gripping members is adapted to travel longitudinally along the boom (24); and
actuating both gripping members (42, 28) includes urging said one (42) of the gripping members to travel longitudinally along the boom toward the at least one bale (52).

18. The method of claim 17 **characterised in that**:
the other (48) of the gripping members is adapted to pivot about boom (24); and
actuating both gripping members (42, 48) includes urging said other (48) of the gripping members to pivot about said boom (24) toward the at least one bale (52).

19. The method of claim 14 **characterised in that** lowering the at least one bale (52) includes moving the boom (24) along the longitudinal axis of the mast assembly (22, 26, 28) toward the base (18).

20. The method of claim 14 **characterised in that** removing the bale (52) includes raising the at least one bale (52) over the open-topped tank (14) to allow the excess liquid to drain from the at least one bale (52) into the open-topped tank (14); and raising the at least one bale (52) includes moving the boom (24) along the longitudinal axis of the mast assembly (22, 26, 28) away from the base (18).

## Patentansprüche

1. Vorrichtung (10) zum Befeuchten und Handhaben wenigstens eines Ballens (52), die enthält:
einen oben offenen Tank (14), der eine Flüssigkeit enthält, um den wenigstens einen Ballen (52) zu befeuchten;
eine nach oben sich erstreckende Mastanordnung (22, 26, 28);
einen Ausleger (24), der von der Mastanordnung (22, 26, 28) getragen wird, wobei der Ausleger (24) zwischen einer abgesenkten Position und einer angehobenen Position beweglich ist und ein erstes Ende und ein zweites Ende besitzt;
**dadurch gekennzeichnet, dass** die Mastanordnung (22, 26, 28) um ihre Längsachse drehbar ist und sich von einer Basis (18) nach oben erstreckt, wobei die Mastanordnung (22, 26, 28) dazu ausgelegt ist, das zweite Ende des Auslegers gleitend zu tragen;
eine Ballengreifvorrichtung (37), die an dem Ausleger (24) benachbart zu dem ersten Ende hiervon angebracht ist, wobei die Ballengreifvorrichtung (37) eine feste Ballenführung (40) aufweist, um mit dem wenigstens einen Ballen (52) in Eingriff zu gelangen, wobei die feste Ballenführung (40) so positionierbar ist, dass sie mit einer Oberseite des Ballens in Kontakt gelangt, und wobei die Ballengreifvorrichtung (37) dazu ausgelegt ist, den Ballen in einer eingetauchten Position in dem Tank (14) zu halten, um die Befeuchtung des wenigstens einen Ballens (52) zu erleichtern;
Mittel, um die Ballengreifvorrichtung (37), den Ausleger und die Mastanordnung (22, 26, 28) zu betätigen, derart, dass ein Ballen, der sich an einem ersten Ort befindet, in die Flüssigkeit in dem Tank (14) eingetaucht werden kann, um den Ballen zu befeuchten, und danach entnommen und an einem zweiten Ort abgelegt werden kann.

2. Vorrichtung (10) nach Anspruch 1, **dadurch gekennzeichnet, dass**:
die Mastanordnung (22, 26, 28) einen inneren Mastabschnitt (26) und einen äußeren Mastabschnitt (28), der konzentrisch um den inneren Mastabschnitt (26) angebracht ist, enthält, wobei der äußere Mastabschnitt (28) relativ zu dem inneren Mastabschnitt (26) längs der Längsachse relativ gleitend beweglich ist; und
der Ausleger (24) an dem äußeren Mastabschnitt (28) angebracht ist.

3. Vorrichtung (10) nach Anspruch 2, **dadurch gekennzeichnet, dass** der Ausleger (24) an dem äußeren Mastabschnitt (28) einseitig unterstützt befestigt ist.

4. Vorrichtung (10) nach Anspruch 2, **dadurch gekennzeichnet, dass** die Betätigungsmittel einen ersten Aktor (32) enthalten, um den äußeren Mastabschnitt (28) der Mastanordnung (22, 26, 28) zu einem Gleiten relativ zu dem inneren Mastabschnitt (26) zu drängen, und einen zweiten Aktor (30) enthalten, um die Mastanordnung (22, 26, 28) zu einer Drehung um ihre Längsachse zu drängen.

5. Vorrichtung (10) nach Anspruch 1, **dadurch gekennzeichnet, dass**:
der wenigstens eine Ballen (52) im Allgemeinen rechtwinklig ist und mehrere Seiten besitzt; und
die Ballengreifvorrichtung (37) konfiguriert ist, um an wenigstens drei Seiten des rechtwinkligen Ballens (52) anzuliegen.

6. Vorrichtung (10) nach Anspruch 1, **dadurch gekennzeichnet, dass**:
die Ballengreifvorrichtung (37) ein Paar erster und zweiter gegenüberliegender Greifarmanordnungen (36, 38) enthält; und
die feste Ballenführung (40) zwischen der ersten und der zweiten Greifarmanordnung (36, 38) angeordnet ist.

7. Vorrichtung (10) nach Anspruch 6, **dadurch gekennzeichnet, dass** die Ballenführung (40) an dem Ausleger (24) fest angebracht ist und hiervon nach unten hängt.

8. Vorrichtung (10) nach Anspruch 7, **dadurch gekennzeichnet, dass** die erste Greifarmanordnung (36) längs des Auslegers (24) gleiten kann und die Betätigungsmittel einen Aktor (46) enthalten, um das Hülsenelement (44) zu einem Gleiten längs des Auslegers (24) zu drängen.

9. Vorrichtung (10) nach Anspruch 8, **dadurch gekennzeichnet, dass** die erste Greifarmanordnung (36) ein Hülsenelement (44), das so angebracht ist, dass es den Ausleger (24) umgibt, und ein Greifelement (42), das von dem Hülsenelement (44) nach unten hängt, enthält.

10. Vorrichtung (10) nach Anspruch 8, **dadurch gekennzeichnet, dass** die zweite Greifarmanordnung (38) ein Greifelement (48) enthält, das für eine Schwenkdrehung um den Ausleger (24) angebracht ist; und die Betätigungsmittel einen Aktor (50) enthalten, um das Greifelement (48) der zweiten Greifarmanordnung (38) zu einem Schwenken um den Ausleger (24) zu drängen.

11. Vorrichtung (10) nach Anspruch 6, **dadurch gekennzeichnet, dass** sowohl die erste als auch die zweite Greifarmanordnung (36) längs des Auslegers (24) gleitend beweglich sind.

12. Vorrichtung (10) nach Anspruch 1, **gekennzeichnet durch** Auslegerdrehmittel (243), die mit der Mastanordnung (22, 26, 28) und mit dem Ausleger (24) gekoppelt sind, um den Ausleger (24) um ihre Längsachse zu drehen.

13. Verfahren zum Handhaben und Befeuchten wenigstens eines Ballens (52), das die folgenden Schritte enthält:
Vorsehen einer Vorrichtung, die eine sich nach oben erstreckende Mastanordnung (22, 26, 28), einen von der Mastanordnung (22, 26, 28) getragenen Ausleger (24) und
einen nach oben offenen Tank (14), der eine Flüssigkeit enthält, um den wenigstens einen Ballen (52) zu befeuchten, aufweist; wobei der Ausleger ein erstes Ende und ein zweites Ende besitzt;
Absenken des wenigstens einen Ballens (52) in den oben offenen Tank (14);
Entnehmen des wenigstens einen Ballens (52) aus dem oben offenen Tank (14),
**gekennzeichnet durch**
ferner Versehen der Vorrichtung mit einer Basis (18),
von der sich die nach oben erstreckende Mastanordnung (22, 26, 28) erstreckt, und mit einer Ballengreifvorrichtung (37), die an dem Ausleger (24) benachbart zu seinem ersten Ende angebracht ist und ein Paar Greifelemente (36, 38) und eine feste Ballenführung (40) enthält;
Ergreifen des wenigstens einen Ballens (52), der sich an einer ersten Position zwischen dem Paar Greifelemente (36, 38) befindet, bevor der wenigstens eine Ballen (52) in den oben offenen Tank (14) abgesenkt wird;
Bewegen des Auslegers (24) relativ zu der Längsachse der Mastanordnung (22, 26, 28), um den Ballen (52) abwechselnd anzuheben oder abzusenken;
Drehen des Auslegers (24) relativ zu der Längsachse der Mastanordnung (22, 26, 28), um den wenigstens einen Ballen (52) aus der ersten Position in eine zweite Position zu bewegen, die sich über dem oben offenen Tank (14) befindet, bevor der wenigstens eine Ballen (52) in den oben offenen Tank (14) abgesenkt wird;
Halten des wenigstens einen Ballens (52) eingetaucht in der Flüssigkeit im Tank (14) mittels der Ballengreifvorrichtung (37), wobei die feste Ballenführung (40) mit der Oberseite des Ballens in Kontakt angeordnet ist, bevor der wenigstens eine Ballen (52) aus dem oben offenen Tank (14) entnommen wird.

14. Verfahren nach Anspruch 13, **dadurch gekennzeichnet, dass**:
der wenigstens eine Ballen (52) im Allgemeinen rechtwinklig ist und mehrere Seiten besitzt; und
das Greifen des wenigstens einen Ballens (52) das Drängen der Ballengreifvorrichtung (37) in einen Anschlag an wenigstens drei Seiten des wenigstens einen Ballens (52) enthält.

15. Verfahren nach Anspruch 13, **dadurch gekennzeichnet, dass** das Greifen des wenigstens einen Ballens (52) das Drängen der Ballenführung (40) in einen Anschlag an der Oberseite des wenigstens einen Ballens (52) und das Betätigen wenigstens eines der Greifelemente (42, 44), um mit dem wenigstens einen Ballen (52) greifend in Eingriff zu gelangen, enthält.

16. Verfahren nach Anspruch 15, **dadurch gekennzeichnet, dass** das Greifen des wenigstens einen Ballens (52) das gleichzeitige Betätigen beider Greifelemente (42, 44) enthält, um mit dem wenigstens einen Ballen (52) greifend in Eingriff zu gelangen.

17. Verfahren nach Anspruch 16, **dadurch gekennzeichnet, dass**:
eines (42) der Greifelemente dazu ausgelegt ist, sich longitudinal längs des Auslegers (24) zu bewegen; und
das Betätigen beider Greifelemente (42, 28) das Drängen des Einen (42) der Greifelemente, damit es sich longitudinal längs des Auslegers zu dem wenigstens einen Ballen (52) bewegt, enthält.

18. Verfahren nach Anspruch 17, **dadurch gekennzeichnet, dass**:
das Andere (48) der Greifelemente dazu ausgelegt ist, um den Ausleger (24) zu schwenken; und
das Betätigen beider Greifelemente (42, 48) das Drängen des Anderen (48) der Greifelemente, damit es um den Ausleger (24) zu dem wenigstens einen Ballen (52) schwenkt, enthält.

19. Verfahren nach Anspruch 14, **dadurch gekennzeichnet, dass** das Absenken des wenigstens einen Ballens (52) das Bewegen des Auslegers (24) längs der Längsachse der Mastanordnung (22, 26, 28) zu der Basis (18) enthält.

20. Verfahren nach Anspruch 14, **dadurch gekennzeichnet, dass** das Entnehmen des Ballens (52) das Anheben des wenigstens einen Ballens (52) über den oben offenen Tank (14) enthält, um zuzulassen, dass überschüssige Flüssigkeit von dem wenigstens einen Ballen (52) in den oben offenen Tank (14) ablaufen kann; und das Anheben des wenigstens einen Ballens (52) das Bewegen des Auslegers (24) längs der Längsachse der Mastanordnung (22, 26, 28) weg von der Basis (18) enthält.

## Revendications

1. Appareil (10) pour humidifier et manipuler au moins une balle (52), comprenant :
un réservoir à dessus ouvert (14) destiné à contenir un liquide pour humidifier l'au moins une balle (52) ;
un ensemble de mât s'étendant vers le haut (22, 26, 28) ;
une flèche (24) portée par ledit ensemble de mât (22, 26, 28), ladite flèche (24) étant déplaçable entre une position abaissée et une position relevée et ayant une première extrémité et une deuxième extrémité ;
**caractérisé en ce que** ledit ensemble de mât (22, 26, 28) peut tourner autour de son axe longitudinal et s'étend vers le haut depuis une base (18), ledit ensemble de mât (22, 26, 28) étant prévu pour porter de manière coulissante ladite deuxième extrémité de ladite flèche ;
un dispositif de préhension de balles (37) monté sur ladite flèche (24) à proximité de la première extrémité de celle-ci, ledit dispositif de préhension de balles (37) comportant un guide de balles fixe (40) destiné à engager l'au moins une balle (52), le guide de balles fixe (40) pouvant être positionné de manière à être en contact avec un dessus de la balle, et dans lequel le dispositif de préhension de balles (37) est agencé de manière à maintenir la balle dans une position immergée dans ledit réservoir (14) pour faciliter l'humidification de l'au moins une balle (52) ;
un moyen pour actionner ledit dispositif de préhension de balles (37), la flèche et ledit ensemble de mât (22, 26, 28), de telle sorte qu'une balle située en un premier emplacement puisse être immergée dans ledit liquide dans ledit réservoir (14) afin d'humidifier ladite balle et puisse ensuite être retirée et déposée en un deuxième emplacement.

2. Appareil (10) selon la revendication 1, **caractérisé en ce que** :
ledit ensemble de mât (22, 26, 28) comporte une portion de mât interne (26) et une portion de mât externe (28) montée concentriquement autour de ladite portion de mât interne (26), ladite portion de mât externe (28) pouvant être déplacée par glissement par rapport à ladite portion de mât interne (26) le long dudit axe longitudinal ; et
ladite flèche (24) est montée sur ladite portion de mât externe (28).

3. Appareil (10) selon la revendication 2, **caractérisé en ce que** ladite flèche (24) est attachée à ladite portion de mât externe (28) en porte-à-faux.

4. Appareil (10) selon la revendication 2, **caractérisé en ce que** ledit moyen d'actionnement comprend un premier actionneur (32) pour amener ladite portion de mât externe (28) dudit ensemble de mât (22, 26, 28) à glisser par rapport à ladite portion de mât interne (26), et un deuxième actionneur (30) pour amener ledit ensemble de mât (22, 26, 28) à tourner autour de son axe longitudinal.

5. Appareil (10) selon la revendication 1, **caractérisé en ce que** :
l'au moins une balle (52) est généralement rectangulaire et présente une pluralité de côtés ; et
le dispositif de préhension de balles (37) est configuré de manière à buter contre au moins trois côtés de la balle rectangulaire (52).

6. Appareil (10) selon la revendication 1, **caractérisé en ce que** :
ledit dispositif de préhension de balles (37) comporte une paire de premier et de deuxième ensembles de bras de préhension opposés (36, 38) ; et
ledit guide de balles fixe (40) est disposé entre lesdits premier et deuxième ensembles de bras de préhension (36, 38).

7. Appareil (10) selon la revendication 6, **caractérisé en ce que** ledit guide de balles (40) est monté fixement sur ladite flèche (24) et est suspendu vers le bas depuis celle-ci.

8. Appareil (10) selon la revendication 7, **caractérisé en ce que** ledit premier ensemble de bras de préhension (36) peut glisser le long de ladite flèche (24), et ledit moyen d'actionnement comprend un actionneur (46) pour amener ledit organe de manchon (44) à glisser le long de ladite flèche (24).

9. Appareil (10) selon la revendication 8, **caractérisé en ce que** ledit premier ensemble de bras de préhension (36) comporte un organe de manchon (44) monté en relation d'enveloppement sur ladite flèche (24), et un organe de préhension (42) suspendu vers le bas depuis ledit organe de manchon (44).

10. Appareil (10) selon la revendication 8, **caractérisé en ce que** ledit deuxième ensemble de bras de préhension (38) comporte un organe de préhension (48) monté de manière à pivoter autour de ladite flèche (24) ; et ledit moyen d'actionnement comprend un actionneur (50) pour amener ledit organe de préhension (48) dudit deuxième ensemble de bras de préhension (38) à pivoter autour de ladite flèche (24).

11. Appareil (10) selon la revendication 6, **caractérisé en ce que** le premier et le deuxième ensemble de bras de préhension (36) peuvent tous les deux être déplacés par glissement le long de ladite flèche (24).

12. Appareil (10) selon la revendication 1, **caractérisé par** un moyen de rotation de flèche (243) accouplé audit ensemble de mât (22, 26, 28) et à ladite flèche (24), pour faire tourner ladite flèche (24) autour de son axe longitudinal.

13. Procédé pour manipuler et humidifier au moins une balle (52), comprenant les étapes consistant à :
fournir un appareil comprenant un ensemble de mât s'étendant vers le haut (22, 26, 28), une flèche (24) portée par l'ensemble de mât (22, 26, 28) et un réservoir à dessus ouvert (14) contenant un liquide pour humidifier l'au moins une balle (52) ; la flèche ayant une première extrémité et une deuxième extrémité ;
abaisser l'au moins une balle (52) dans le réservoir à dessus ouvert (14) ;
retirer l'au moins une balle (52) du réservoir à dessus ouvert (14) ;
**caractérisé par** les étapes supplémentaires consistant à :
fournir en outre audit appareil une base (18) depuis laquelle s'étend l'ensemble de mât s'étendant vers le haut (22, 26, 28), un dispositif de préhension de balles (37) monté sur la flèche (24) à proximité de sa première extrémité, et comportant une paire d'organes de préhension (36, 38) et un guide de balles fixe (40) ;
saisir l'au moins une balle (52) située dans une première position entre la paire d'organes de préhension (36, 38) avant d'abaisser l'au moins une balle (52) dans le réservoir à dessus ouvert (14) ;
déplacer la flèche (24) par rapport à l'axe longitudinal de l'ensemble de mât (22, 26, 28) pour soit lever soit abaisser la balle (52) ;
faire tourner la flèche (24) par rapport à l'axe longitudinal de l'ensemble de mât (22, 26, 28) pour déplacer l'au moins une balle (52) de la première position dans une deuxième position située au-dessus du réservoir à dessus ouvert (14) avant d'abaisser l'au moins une balle (52) dans le réservoir à dessus ouvert (14) ;
maintenir l'au moins une balle (52) immergée dans le liquide dans le réservoir (14) avec le dispositif de préhension de balles (37), le guide de balles fixe (40) étant positionné en contact avec le dessus de la balle avant d'enlever l'au moins une balle (52) du réservoir à dessus ouvert (14).

14. Procédé selon la revendication 13, **caractérisé en ce que** :
l'au moins une balle (52) est généralement rectangulaire et présente une pluralité de côtés ; et
la préhension de l'au moins une balle (52) inclut d'amener le dispositif de préhension de balles (37) à buter contre au moins trois côtés de l'au moins une balle (52).

15. Procédé selon la revendication 13, **caractérisé en ce que** la préhension de l'au moins une balle (52) inclut d'amener le guide de balles (40) à buter contre le dessus de l'au moins une balle (52) et actionner au moins l'un des organes de préhension (42, 48) pour s'engager par préhension avec l'au moins une balle (52).

16. Procédé selon la revendication 15, **caractérisé en ce que** la préhension de l'au moins une balle (52) inclut d'actionner les deux organes de préhension (42, 48) simultanément pour s'engager par préhension avec l'au moins une balle (52).

17. Procédé selon la revendication 16, **caractérisé en ce que** :
l'un (42) des organes de préhension est prévu pour se déplacer longitudinalement le long de la flèche (24) ; et
l'actionnement des deux organes de préhension (42, 48) inclut d'amener ledit organe de préhension (42) à se déplacer longitudinalement le long de la flèche vers l'au moins une balle (52).

18. Procédé selon la revendication 17, **caractérisé en ce que** :
l'autre (48) des organes de préhension est prévu pour pivoter autour de la flèche (24) ; et
l'actionnement des deux organes de préhension (42, 48) inclut d'amener ledit autre organe de préhension (48) à pivoter autour de ladite flèche (24) vers l'au moins une balle (52).

19. Procédé selon la revendication 14, **caractérisé en ce que** l'abaissement de l'au moins une balle (52) inclut de déplacer la flèche (24) le long de l'axe longitudinal de l'ensemble de mât (22, 26, 28) vers la base (18).

20. Procédé selon la revendication 14, **caractérisé en ce que** le retrait de la balle (52) inclut de soulever l'au moins une balle (52) au-dessus du réservoir à dessus ouvert (14) pour permettre au liquide en excès de s'égoutter de l'au moins une balle (52) dans le réservoir à dessus ouvert (14) ; et le soulèvement de l'au moins une balle (52) inclut de déplacer la flèche (24) le long de l'axe longitudinal de l'ensemble de mât (22, 26, 28) à l'écart de la base (18).
